# EUROPÄISCHE PATENTSCHRIFT

(11) **EP 1 312 524 B1**
(45) Veröffentlichungstag und Bekanntmachung des Hinweises auf die Patenterteilung: **01.12.2004**
(21) Anmeldenummer: 02020851.8
(22) Anmeldetag: 18.09.2002
(51) Int. Cl.: B60T 13/26, B60T 13/68, B60T 17/22

(54) **Verfahren zum Betrieb einer elektrisch gesteuerten Druckmittelbremsanlage**
Method of operating an electrically controlled braking system
Méthode d'opération d'une système de freinage électriquement contrôlée

(30) Priorität: 17.11.2001 DE 10156673
(43) Veröffentlichungstag der Anmeldung: 21.05.2003
(73) Patentinhaber: WABCO GmbH & CO. OHG, 30453 Hannover (DE)
(72) Erfinder: Holst, Hans, 30926 Seelze (DE); Stender, Axel, 31787 Hameln (DE); Witte, Nobert, 31867 Lauenau (DE)
(74) Vertreter: Günther, Constantin

(56) Entgegenhaltungen:
- EP-A- 0 530 460
- EP-A- 0 829 406
- DE-A- 4 016 463
- US-A- 4 568 129
- US-A- 4 861 115

## Beschreibung

Die Erfindung betrifft ein Verfahren zum Betrieb einer elektrisch gesteuerten Druckmittelbremsanlage gemäß dem Oberbegriff des Patentanspruchs 1.

Ein gattungsgemäßes Verfahren ist aus der DE 196 37 484 A1 bekannt.

Bei dem bekannten Verfahren wird mittels einer Ventileinrichtung der Bremsdruck in einem Bremszylinder gemäß einer Solldruck-Vorgabe eingestellt. Der Solldruck wird dort von einer Druckversorgungsleitung eines Zugfahrzeugs an ein daran angekoppeltes Anhängefahrzeug übertragen. Der Solldruck stellt dabei ein Maß für die Bremsbetätigung des Fahrers des Zugfahrzeugs dar. Zur Sensierung des Solldrucks ist in oder an dem Anhängefahrzeug ein Solldrucksensor vorgesehen, der den Solldruck angebende Solldruckdaten an eine elektrische Steuereinrichtung, die zur Steuerung der Druckmittelbremsanlage des Anhängefahrzeugs dient, abgibt. Die Steuereinrichtung steuert elektrisch betätigbare Ventileinrichtungen derart, daß in dem Bremszylinder ein dem Solldruck entsprechender Bremsdruck eingestellt wird. Für die Druckmittelzufuhr wird im störungsfreien Normalbetrieb Druckmittel aus einem zur Druckmittelbremsanlage des Anhängefahrzeugs gehörenden Vorratsbehälter entnommen.

Durch die elektrische Steuerung des Bremsdrucks spricht die Bremsanlage im Vergleich zur konventionellen reinen Druckmittelbetätigung schneller an und kann dynamischer betätigt werden, da pneumatische Totzeiten deutlich reduziert werden können. Für den Fall einer Störung in der elektrischen Steuerung ist zur Sicherheit ein Umschaltventil (dort mit 9 bezeichnet) vorgesehen, über das die Druckmittelzufuhr zu dem Bremszylinder von dem Vorratsbehälter auf den Solldruck umgeschaltet werden kann. In einem solchen Fall erfolgt die Betätigung der Bremsanlage rein pneumatisch wie bei herkömmlichen Druckmittelbremsanlagen.

Im Normalbetrieb, d. h. bei elektrischer Steuerung der Druckmittelbremsanlage, kommt dem Solldrucksensor eine erhebliche Bedeutung hinsichtlich der Funktionssicherheit der Bremsanlage zu, da die von diesem Sensor abgegebenen Daten dazu verwendet werden, den Bremsdruck in dem Bremszylinder und damit die gesamte Abbremsung des Fahrzeugs zu steuern. Es ist daher wichtig, die von dem Solldrucksensor abgegebenen Daten auf Korrektheit zu überprüfen. Hierfür ist es bekannt, an einen den Solldruck führenden Druckmittelpfad neben dem Solldrucksensor noch einen Druckschalter anzuordnen, der ein digitales Schaltsignal bei einer bestimmten Druckschwelle abgibt. Die Druckschwelle ist dabei derart gewählt, daß sie in der Nähe der Ansprechschwelle der elektrischen Drucksteuerung liegt, z. B. 0,7 bar. Die Druckschwelle kann auch im Bereich des Ansprechdrucks der Druckmittelbremse gewählt werden, z. B. 0,2 bar.

Mittels des Druckschalters soll insbesondere derjenige gefährliche Zustand erkannt und vermieden werden, bei dem der Fahrer die Bremsanlage des Fahrzeugs nicht betätigt, demzufolge ein Solldruck von 0 bar vorliegt, der Solldrucksensor aber, z. B. infolge eines Defekts, Solldruckdaten abgibt, die der Steuereinrichtung einen wesentlich höheren Solldruck signalisieren. Um zu vermeiden, daß die Steuereinrichtung einen Bremsdruck einstellt, der diesen falschen Solldruckdaten entspricht, fragt die Steuereinrichtung zusätzlich das Signal des Druckschalters ab und erkennt so, daß der Solldruck in Wirklichkeit unterhalb der Schaltschwelle des Druckschalters liegt und somit der Bremszylinder nicht mit Druckmittel befüllt werden soll, somit also keine Bremsung ausgelöst werden soll.

Das zuvor beschriebene Verfahren ist hinsichtlich seiner Sicherheit und Zuverlässigkeit bereits sehr ausgereift. Die Verwendung eines Druckschalters zusätzlich zu dem Solldrucksensor stellt jedoch einen erhöhten apparativen Aufwand dar. Zudem kann es auch passieren, daß der Druckschalter einen Defekt aufweist, so daß auch hierfür zusätzliche Sicherheitsüberprüfungen sowie Plausibilitätsprüfungen zwischen den Signalen des Druckschalters und des Solldrucksensors erforderlich sind.

Der vorliegenden Erfindung liegt daher die Aufgabe zugrunde, ein Verfahren zum Betrieb einer elektrisch gesteuerten Druckmittelbremsanlage anzugeben, welches mit geringem apparativem Aufwand, insbesondere ohne Notwendigkeit eines Druckschalters, eine hohe Funktionssicherheit der Bremsanlage ermöglicht.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Der Begriff "Bremse" umfaßt nachfolgend als Sammelbegriff außer den in Bremseingriff tretenden Bauteilen, wie Bremstrommel und Bremsbacke, auch eine Zuspanneinrichtung, wie Bremszylinder, und Übertragungsteile, wie Bremsgestänge, Bremswelle, Bremsnocken.

Die Erfindung hat den Vorteil, daß auf zusätzliche Elemente, wie den Druckschalter, zur Überprüfung der Solldruckdaten gänzlich verzichtet werden kann. Die Überprüfung kann durch einen in der elektrischen Steuereinrichtung vorgesehenen Programmteil rein softwaremäßig erfolgen und ist daher einfach und kostengünstig zu realisieren. Als redundantes Sensorelement zur Überprüfung der Solldruckdaten kann dabei ein ohnehin vorhandener Bremsdrucksensor, welcher für eine präzise Einstellung des Bremsdrucks in dem Bremszylinder ohnehin erforderlich ist, mit genutzt werden.

Die Erfindung kann vorteilhaft in Anhängefahrzeugen ebenso wie in Zugfahrzeugen eingesetzt werden. Vorteilhaft ist außerdem die Möglichkeit, sämtliche Drucksensoren, die elektrische Steuereinrichtung sowie die Ventileinrichtung baulich in einem kompakten Steuermodul integriert auszuführen.

Gemäß einer vorteilhaften Weiterbildung der Erfindung erfolgt unmittelbar vor einer beabsichtigten Befüllung des Bremszylinders aus dem Solldruck eine geringfügige Entlüftung des Bremszylinders. Hierdurch ist es möglich, auf einfache Weise zu hohe Solldruckdaten festzustellen. Ein weiterer Vorteil dieser Weiterbildung liegt darin, daß mit einer einzigen Umschaltung auf den Solldruck sowohl zu geringe Solldruckdaten als auch zu hohe Solldruckdaten erkannt werden können.

Im Falle zu hoher Solldruckdaten liegen die von dem Solldrucksensor abgegebenen Daten höher als der wirkliche Solldruck. Durch den Versuch einer Befüllung des Bremszylinders aus dem Solldruck wird dann keine ausreichende Bremsdruckerhöhung auf das vor der Entlüftung vorliegende Niveau möglich sein, gegebenenfalls erfolgt sogar eine Bremsdruckabsenkung. Zumindest bleibt die erwartete Bremsdruckerhöhung auf das vor der Entlüftung eingestellte Druckniveau aus. Dies kann die Steuereinrichtung als fehlerhaft erkennen.

Im Falle zu niedriger Solldruckdaten zeigen die Solldruckdaten einen Druck an, der niedriger liegt als der wirkliche Solldruck. Eine ausreichend lange Befüllung des Bremszylinders aus dem Solldruck bewirkt dann einen Anstieg des Bremsdrucks auf ein Druckniveau oberhalb des vor der Entlüftung eingestellten Drucks. Dies kann die Steuereinrichtung ebenfalls als fehlerhaft erkennen.

Besonders vorteilhaft ist es, die Entlüftung innerhalb des Hysteresebereichs der Bremse durchzuführen, d. h. derart gering zu halten, daß infolge der Hysterese die Bremskraft der Bremse sich trotz Bremsdruck-Verminderung nicht ändert. In diesem Fall können zyklisch wiederkehrende Überprüfungen der von dem Solldrucksensor ermittelten Solldruckdaten während einer Bremsung beliebig durchgeführt werden, ohne daß hierdurch eine spürbare Reaktion an dem Fahrzeug hervorgerufen wird.

Unter Nennung weiterer Vorteile wird die Erfindung nachfolgend anhand eines Ausführungsbeispiels unter Verwendung von Zeichnungen näher erläutert.

Es zeigen
- Fig. 1: eine elektrisch gesteuerte Druckmittelbremsanlage und
- Fig. 2: beispielhafte Druckverläufe in einem Druck-/Zeitdiagramm.

In den Figuren werden gleiche Bezugszeichen für einander entsprechende Teile und Signale verwendet. Elektrische Leitungen sind mit gestrichelten Linien und druckführende Leitungen sind mit durchgezogenen Linien dargestellt.

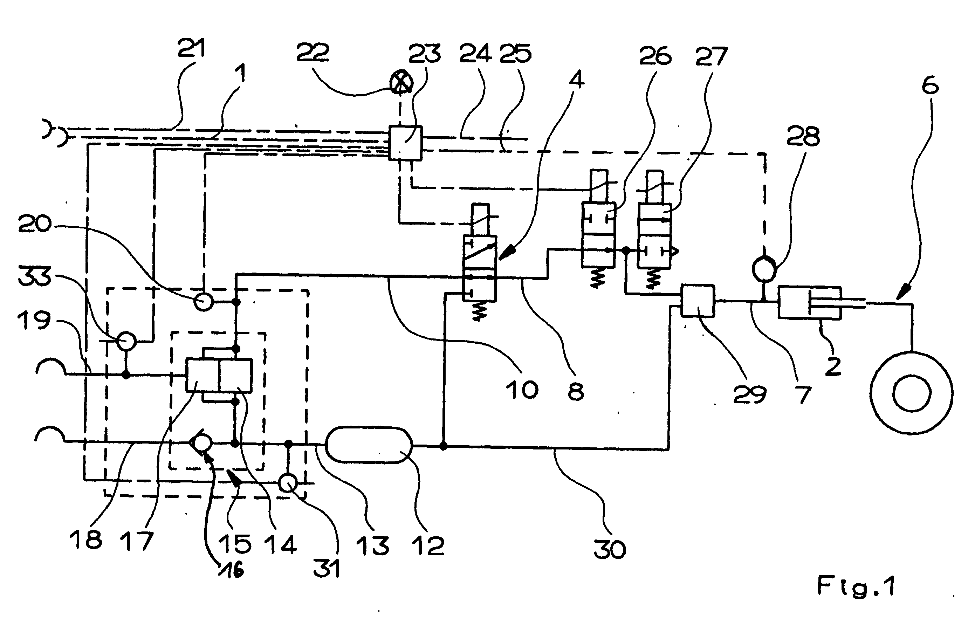

In der Fig. 1 wird die erfindungsgemäße Bremsanlage anhand einer Zweileitungs-Anhängerbremsanlage dargestellt. Die Anhängerbremsanlage besteht aus einer herkömmlichen druckluftbetriebenen Zweileitungs-Anhängerbremsanlage und einer Erweiterung derselben um eine elektrische Betätigungseinrichtung.

Zu der herkömmlichen Zweileitungs-Anhängerbremsanlage gehören eine Bremse (6), enthaltend einen Bremszylinder (2), eine Vorratsleitung (18), eine Sicherungseinrichtung (16), einen Vorratsbehälter (12), eine pneumatische Bremsleitung (19), ein Betätigungsventil (17), eine Notbremseinrichtung (14) und weitere Druckleitungen (13, 10, 30, 7, 8). Die elektrische Betätigungseinrichtung besteht aus einer elektrischen Steuereinrichtung (23), einer elektrischen Stromversorgung über elektrische Leitungen (1, 21), Drucksensoren (20, 28, 31, 33), welche einen jeweils gemessenen Druck in ein elektrisches Signal umwandeln und an die Steuereinrichtung (23) abgeben, einer Warnlampe (22), einer elektrisch betätigbaren Ventileinrichtung (4, 26, 27, 29), den zugehörigen elektrischen Leitungen (24, 25) zur Verbindung mit der Steuereinrichtung (23) sowie weiteren Druckleitungen.

Die Vorratsleitung (18) ist über die Sicherungseinrichtung (16) mit dem Vorratsbehälter (12) verbunden. Die in gebräuchlicher Weise als Rückschlagventil ausgebildete und dargestellte Sicherungseinrichtung (16) läßt eine Strömung aus der Vorratsleitung (18) in den Vorratsbehälter (12) zu, verhindert aber eine Strömung in entgegengesetzter Richtung.

Die Notbremseinrichtung (14) ist als auf Druckabfall ansprechendes Relaisventil ausgebildet und entspricht damit einer häufig eingesetzten Bauart. Sie ist vorratsseitig über die Druckleitung (13) mit dem Vorratsbehälter (12) und ausgangsseitig über die Druckleitung (10) mit der Ventileinrichtung (4, 26, 27, 29) verbunden. Steuerseitig ist die Notbremseinrichtung (14) mit der Vorratsleitung (18) verbunden.

Das Betätigungsventil (17) ist als Relaisventil ausgebildet und entspricht damit ebenfalls einer gebräuchlichen Bauart. Das Betätigungsventil (17) steht vorratsseitig bzw. ausgangsseitig mit den Druckleitungen (10, 13) in Verbindung wie die Notbremseinrichtung (14). Steuerseitig ist das Betätigungsventil (17) an die pneumatische Bremsleitung (19) angeschlossen. Ausgangsseitig gibt das Betätigungsventil (17) einen Solldruck (p_{Soll}) in die Druckleitung (10) ab.

In der Praxis sind die Sicherheitseinrichtung (16), die Notbremseinrichtung (14) und das Betätigungsventil (17) häufig zu einer als "Anhängerbremsventil" bezeichneten Baueinheit (15) vereinigt, wie sie durch eine gestrichelte Umfassungslinie angedeutet ist.

Die elektrische Versorgung der elektrischen Betätigungseinrichtung ist als elektrische Versorgungsleitung (1, 21) dargestellt. Diese ist im Betriebszustand mit dem Zugfahrzeug, genauer mit dessen elektrischer Anlage, verbunden, so daß also die elektrische Versorgung der elektrischen Betätigungseinrichtung vom Zugfahrzeug aus erfolgt. Die elektrische Versorgung kann aber auch durch eine eigene elektrische Anlage des Anhängers sichergestellt werden, z. B. durch eine Anhänger-Batterie. Wesentlich ist, daß die elektrische Versorgung der elektrischen Betätigungseinrichtung im Betriebszustand ständig elektrische Spannung und elektrischen Strom zur Verfügung stellt. Eine solche elektrische Versorgung ist beispielsweise bei Anhängerbremsanlagen mit Blokkierschutzeinrichtung vorhanden.

Die Ventileinrichtung (4, 26, 27, 29) besteht aus einem als elektromagnetisch betätigbares 3/2-Wegeventil ausgebildeten Umschaltventil (4), einem ersten elektrisch betätigbaren 2/2-Wegeventil (26), welches als Einlaßventil dient, einem zweiten elektrisch betätigbaren 2/2-Wegeventil (27), welches als Auslaßventil dient, sowie einem Relaisventil (29). Dem Relaisventil (29) wird über die Druckleitung (30) ein Vorratsdruck (p_{Vorrat}) von dem Vorratsbehälter (12) zugeführt. Über eine weitere Druckleitung wird dem Relaisventil (29) ein Steuerdruck von den Ventilen (26, 27) zugeführt. Das Relaisventil (29) gibt an seiner Ausgangsseite über eine Druckleitung (7) einen Bremsdruck (p_{Brems}) an den Bremszylinder (2) ab, der dem von den Ventilen (26, 27) eingestellten Steuerdruck entspricht, wobei der Druckmittelstrom zu dem Bremszylinder (2) aus dem Vorratsbehälter (12) entnommen wird.

Das Umschaltventil (4) dient zur Umschaltung des über die Druckleitung (8) an die Ventile (26, 27) geführten Drucks zwischen dem Vorratsdruck (p_{Vorrat}) einerseits oder, wie durch die in der Fig. 1 dargestellte Schaltstellung des Umschaltventils (4) angegeben, dem Solldruck (p_{Soll}) über die Druckmittelleitung (10) andererseits. Bei Ausfall oder Störung der elektrischen Steuerung schaltet das Umschaltventil (4) in seine in der Fig. 1 dargestellte Stellung und ermöglicht so eine Bremsdrucksteuerung auf konventionellem pneumatischen Weg über das Anhängersteuerventil (15). Die Druckmittelzufuhr zu dem Bremszylinder erfolgt dann über die Druckleitung (10), das Umschaltventil (4), die Druckleitung (8), das bei Ausfall oder Störung der elektrischen Anlage in Durchgangsstellung befindliche Ventil (26) sowie das Relaisventil (29). In diesem Fall ist das Ventil (27) in die Sperrstellung geschaltet, wie in der Fig. 1 dargestellt.

Der Drucksensor (20) dient zur Gewinnung von Eingangsdaten für die Steuereinrichtung (23), welche den von dem Anhängersteuerventil (15) abgegebenen Solldruck (p_{Soll}) angeben und nach welchen die Steuereinrichtung (23) den in dem Bremszylinder (2) einzustellenden Druck regelt. Der Drucksensor (28) dient zur Gewinnung von weiteren Eingangsdaten für die Steuereinrichtung (23), welche den in dem Bremszylinder (2) jeweils vorliegenden Bremsdruck (p_{Brems}) angeben. Der Drucksensor (20) sei nachfolgend als Solldrucksensor bezeichnet, die von ihm abgegebenen Daten als Solldruckdaten (D_{Soll}). Der Drucksensor (28) sei nachfolgend als Bremsdrucksensor bezeichnet, die von ihm abgegebenen Daten als Bremsdruckdaten (D_{Brems}).

Die Steuereinrichtung (23) vergleicht die Bremsdruckdaten (D_{Brems}) mit den Solldruckdaten (D_{Soll}) und bewirkt gegebenenfalls durch Betätigung der Ventile (26, 27) eine Anpassung des Bremsdrucks (p_{Brems}). Optional kann ein Drucksensor (33) zur zusätzlichen Sensierung des vor dem Anhängersteuerventils in der Bremsdruckleitung anliegenden Drucks vorgesehen sein. Außerdem kann ebenfalls optional ein Drucksensor (31) zur Sensierung des Vorratsdrucks (p_{Vorrat}) vorgesehen sein.

Die Bremsanlage gemäß Fig. 1 arbeitet wie folgt.

Wenn nicht gebremst werden soll oder wenn eine Störung der elektrischen Anlage vorliegt, dann ist das Umschaltventil (4) derart geschaltet, daß der Solldruck (p_{Soll}) über die Druckleitungen (10, 8) zu der in diesem Fall auf Durchlaß geschalteten Ventileinrichtung (26) geleitet wird. Die Ventileinrichtung (27) ist in diesem Fall in die Sperrstellung geschaltet. Eine Bremsung kann dann, wie schon erwähnt, rein pneumatisch erfolgen.

Sobald eine Bremsung, z. B. durch Betätigung des Fußbremsventils in dem Zugfahrzeug, eingeleitet wird, steigt der in der Bremsleitung (19) vorliegende Druck auf einen von dem Fahrer gewünschten Wert an, welcher über das Anhängersteuerventil (15) als Solldruck (p_{Soll}) in die Druckleitung (10) übertragen wird. Bei funktionsfähiger elektrischer Anlage wird der jeweils vorliegende Solldruck (p_{Soll}) in Form eines elektrischen Signals als Solldruckdaten (D_{Soll}) von dem Solldrucksensor (20) an die Steuereinrichtung (23) gemeldet. Die Steuereinrichtung (23) erkennt oberhalb der Ansprechschwelle der elektrischen Drucksteuerung, z. B. 0,7 bar, liegende Solldruckdaten (D_{Soll}) und schaltet daraufhin das Umschaltventil (4) derart um, daß der Vorratsdruck (p_{Vorrat}) über die Druckleitung (8) an die Ventile (26, 27) geleitet wird. Durch geeignete Betätigung der Ventile (26, 27) bewirkt die Steuereinrichtung (23) dann die Einstellung eines Bremsdrucks (p_{Brems}) in dem Bremszylinder (2), der dem durch die Solldruckdaten (D_{Soll}) angegebenen Solldruck (p_{Soll}) entspricht. Hierbei vergleicht die Steuereinrichtung (23) die von dem Drucksensor (28) gemeldeten Bremsdruckdaten (D_{Brems}) mit den Solldruckdaten (D_{Soll}). Bei einer Änderung des über die Bremsleitung (19) in die Bremsanlage eingespeisten Solldrucks (p_{Soll}), welche die Steuereinrichtung (23) durch sich ändernde Solldruckdaten (D_{Soll}) erkennt, führt die Steuereinrichtung (23) wiederum durch Betätigung der Ventile (26, 27) den Bremsdruck (p_{Brems}) dem Solldruck (p_{Soll}) nach. Einer derartigen Druckregelung können beim praktischen Betrieb des Fahrzeuges weitere druckbeeinflussende Funktionen überlagert sein, wie z. B. Antiblockierregelung oder achslastabhängige Bremskraftverteilung. In solchen Fällen kann die Steuereinrichtung (23) auch einen von dem Solldruck (p_{Soll}) abweichenden Bremsdruck (p_{Brems}) in dem Bremszylinder (2) einstellen.

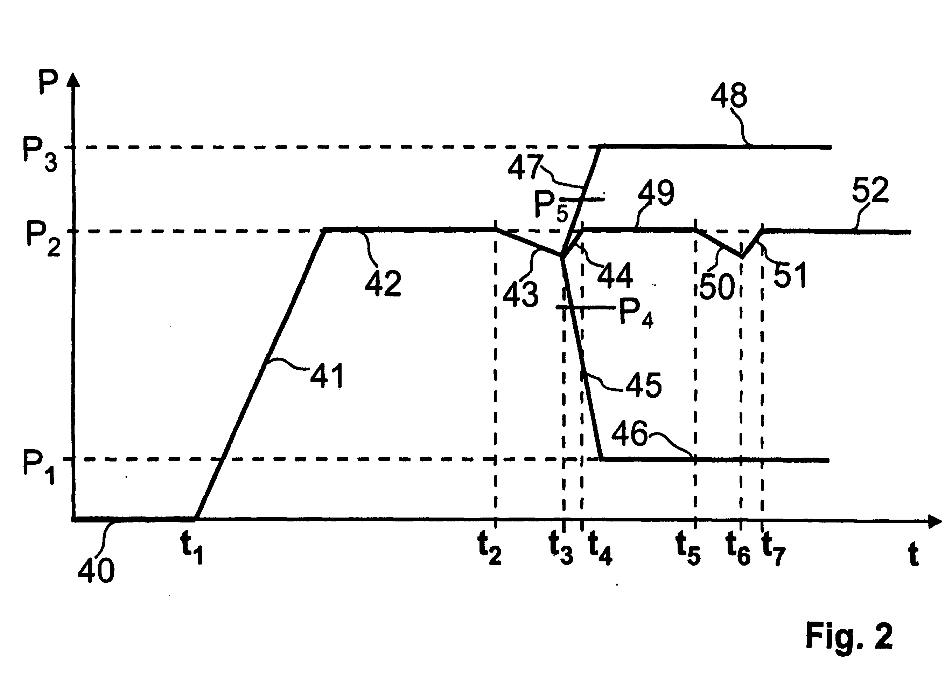

Im Falle eines Defekts an dem Solldrucksensor (20) kann es vorkommen, daß die an die Steuereinrichtung (23) gemeldeten Solldruckdaten (D_{Soll}) erheblich höher sind als der real vorliegende, von der Bremsbetätigung durch den Fahrer hervorgerufene Solldruck (p_{Soll}). Ohne geeignete Sicherheitsmaßnahmen könnte es dann passieren, daß die Steuereinrichtung (23) den Bremszylinder (2) mit einem Bremsdruck (p_{Brems}) beaufschlagt, ohne daß der Fahrer in Wirklichkeit eine Bremsung wünscht. Um diesen und andere Defekte an dem Solldrucksensor (20) zu erkennen und unerwünschte Auswirkungen auf die Bremsanlage zu vermeiden, wird die nachfolgend anhand der Fig. 2 beschriebene Überprüfung der Solldruckdaten (D_{Soll}) durchgeführt.

In der Fig. 2 ist der Verlauf der Solldruckdaten (D_{Soll}) und der Bremsdruckdaten (D_{Brems}) innerhalb eines Zeitdiagramms dargestellt. Hierbei sind an der Ordinate Druckwerte aufgetragen, an der Abszisse Zeitwerte. Beginnend von dem Zeitpunkt t = 0 bis zum Zeitpunkt t = t₁ ist eine Betriebsphase der Bremsanlage dargestellt, in der sowohl die Solldruckdaten (D_{Soll}) als auch die Bremsdruckdaten (D_{Brems}) den Wert Null aufweisen, dargestellt durch die Linie (40). Zum Zeitpunkt t = t₁ erfolgt ein Anstieg der Solldruckdaten (D_{Soll}) auf den Druckwert (p₂). Die Steuereinrichtung (23) führt den Bremsdruck (p_{Brems}) quasi verzögerungsfrei nach, so daß die Bremsdruckdaten (D_{Brems}) den gleichen Anstieg ab dem Zeitpunkt t = t₁ erfahren. Beide Druckdatenverläufe (D_{Soll}, D_{Brems}) sind in der Fig. 2 durch die Linie (41) dargestellt. Nach Erreichen des Druckniveaus (p₂) bleiben Bremsdruckdaten (D_{Brems}) und Solldruckdaten (D_{Soll}) konstant und folgen der Linie (42).

Bereits zum Zeitpunkt t = t_{**1**} wurde in der Steuereinrichtung (23) ein Zeitzähler gestartet, welcher die Zeit vom Beginn der Bremsung, repräsentiert durch den Anstieg der Solldruckdaten (D_{Soll}), mißt und nach Ablauf einer vorgegebenen Wartezeit (t₂-t₁) zum Zeitpunkt t = t₂ einen Testzyklus zur Überprüfung der Solldruckdaten (D_{Soll}) auslöst. Die Wartezeit kann für eine schnelle Überprüfung auch sehr kurz gewählt werden, bis hin zu dem Wert Null. Der Testzyklus besteht, kurz zusammengefaßt, aus einer Umschaltung des Umschaltventils (4) von dem Vorratsdruck (p_{Vorrat}) auf den Solldruck (p_{Soll}), einer Entlüftung durch Betätigung des Auslaßventils (27), einer Belüftung durch Betätigung des Einlaßventils (26), einer Beobachtung des Verlaufs der Bremsdruckdaten (D_{Brems}) und, falls dabei kein Fehler erkannt wurde, einer Rückschaltung des Umschaltventils (4) auf den Vorratsdruck (p_{Vorrat}).

Das erfindungsgemäße Verfahren kann prinzipiell auch ohne den erwähnten Testzyklus vorteilhaft eingesetzt werden, z.B. indem eine durch Bremsanforderungen des Fahrers des Fahrzeuges hervorgerufene Bremsdruckänderung für die Überprüfung der Solldruckdaten (D_{Soll}) herangezogen wird. Die Verwendung eines oder mehrerer Testzyklen, die vorzugsweise in festgelegten Zeitabständen ausgelöst werden, hat den Vorteil, daß zu definierten Zeitpunkten die Überprüfung der Solldruckdaten (D_{Soll}) durchgeführt werden kann und somit eine definierte Fehler-Erkennungszeit realisiert werden kann. Hierdurch können Fehler schneller erkannt werden.

Zu Beginn des Testzyklus, zum Zeitpunkt t = t₂, schaltet die Steuereinrichtung (23) die Druckmittelzuführung zu dem Bremszylinder (2) mittels des Umschaltventils (4) von dem Vorratsdruck (p_{Vorrat}) auf den Solldruck (p_{Soll}) um. In dem Beispiel der Fig. 2 wird angenommen, daß sich der Bremswunsch des Fahrers ab dem Zeitpunkt t = t₁ nicht ändert, sodaß in dem vorliegenden Betriebszustand an sich keine Änderung des Bremsdrucks (p_{Brems}) erforderlich ist. Daher befindet sich sowohl das Einlaßventil (26) als auch das Auslaßventil (27) in der Sperrstellung, sodaß sich zunächst nichts an dem Bremsdruck (p_{Brems}) ändern kann, unabhängig von dem anliegenden Solldruck (p_{Soll}). Um die Überprüfung der Solldruckdaten (D_{Soll}) durchführen zu können, wird künstlich eine geringfügige Änderung des Bremsdrucks (p_{Brems}) durch eine Entlüftung herbeigeführt, indem das Auslaßventil (27) kurzzeitig zwischen den Zeitpunkten t = t₂ und t = t₃ geöffnet wird. Hierdurch verringert sich der Bremsdruck (p_{Brems}) in dem Bremszylinder z.B. um 0,5 bar, was durch entsprechende Bremsdruckdaten (D_{Brems}) der Steuereinrichtung (23) gemeldet wird. In der Fig. 2 ist diese Bremsdruckverringerung durch die Linie (43) dargestellt. Die Bremsdruckverringerung erfolgt in einem relativ geringen Maß, derart, daß infolge der Hysterese der Bremse (6) die an dem gebremsten Fahrzeugrad anliegende Bremskraft unverändert bleibt.

Ab dem Zeitpunkt t = t₃ wird das Auslaßventil (27) geschlossen und das Einlaßventil (26) geöffnet. Nun erfolgt eine Druckmittelzufuhr zu dem Bremszylinder (2) über die Druckleitungen (10, 8) aus dem Solldruck (p_{Soll}) heraus. Bei einwandfreier Funktion der Bremsanlage, insbesondere des Drucksensors (20), wird sich nach kurzer Zeit, d. h. zum Zeitpunkt t = t₄, wiederum ein Bremsdruck (p_{Brems}) einstellen, welcher dem Druckniveau (p₂) entspricht. Dieses für den fehlerfreien Fall geltende Verhalten ist in der Fig. 2 durch die Linie (44) dargestellt.

Im fehlerfreien Fall wird dann zu dem Zeitpunkt t = t₄ das Umschaltventil (4) zurückgeschaltet, so daß eine Druckmittelzufuhr zu dem Bremszylinder (2) wiederum aus dem Vorratsbehälter (12) erfolgen kann. Der Bremsdruck (p_{Brems}) verharrt hiernach für eine bestimmte Zeit konstant auf dem Druckniveau (p₂), sofern der Fahrer nicht andere Bremsdrücke anfordert. Ebenfalls zu dem Zeitpunkt t = t₄ wird der Zeitzähler erneut gestartet. Nach einer weiteren Wartezeit (t₅ - t₄), d.h. zu dem Zeitpunkt t = t₅, löst die Steuereinrichtung (23) einen weiteren Testzyklus nach dem zuvor beschriebenen Muster aus, wie durch die Linien (50, 51, 52) dargestellt.

Bei Vorliegen eines Fehlers an dem Solldrucksensor (20) oder anderen Teilen der Bremsanlage sind zwei Fälle zu unterscheiden, nämlich erstens, daß der Solldrucksensor (20) zu hohe Solldruckdaten (D_{Soll}) an die Steuereinrichtung (23) meldet, und zweitens, daß der Solldrucksensor (20) zu niedrige Solldruckdaten (D_{Soll}) an die Steuereinrichtung (23) meldet.

Im ersten Fall ergäbe sich ab dem Zeitpunkt t = t_{**3**} ein Verlauf der Bremsdruckdaten (D_{Brems}) in der Fig. 2 gemäß der Linie (45), da in Wirklichkeit ein geringerer Solldruck (p_{Soll}) zur Verfügung steht als durch den Solldrucksensor (20) gemeldet. Beispielsweise könnte ein Druck auf dem Druckniveau (p₁) zur Verfügung stehen, was dazu führen würde, daß der Bremsdruck (p_{Brems}) infolge des Versuchs, Druckmittel aus dem Solldruck (p_{Soll}) dem Bremszylinder (2) zuzuführen, auf dieses Druckniveau (p₁) absinkt, wie durch die Linien (45, 46) angedeutet. Aus Sicherheitsgründen erkennt die Steuereinrichtung (23) jedoch bereits bei einem Druckniveau (p₄) eine Fehlfunktion des Solldrucksensors (20) und aktiviert daraufhin die Warnlampe (22). Außerdem schaltet die Steuereinrichtung (23) die Bremsanlage in die konventionelle, nicht elektrisch gesteuerte Betriebsart um.

Im zweiten Fall ergäbe sich ab dem Zeitpunkt t = t₃ ein Verlauf der Bremsdruckdaten (D_{Brems}) gemäß der Linien (47, 48), da in Wirklichkeit ein höherer Solldruck (p_{Soll}) zur Verfügung steht als durch den Solldrucksensor (20) gemeldet. Beispielsweise könnte ein Druck auf dem Druckniveau (p₃) zur Verfügung stehen. Hierdurch würde der Bremsdruck (p_{Brems}) in dem Bremszylinder (2) einen Anstieg gemäß Linie (47) bis auf das Druckniveau (p₃) erfahren und dann dort verharren, wie durch die Linie (48) angedeutet. Bereits bei Erreichen des Druckniveaus (p₅) erkennt die Steuereinrichtung eine Fehlfunktion des Solldrucksensors (20), aktiviert daraufhin die Warnlampe (22) und schaltet die Bremsanlage in die konventionelle Betriebsart um.

Mittels der beschriebenen Überprüfung der Solldruckdaten (D_{Soll}) kann neben Defekten an dem Solldrucksensor (20) noch eine Vielzahl von störenden Einflüssen auf diese Daten erkannt werden, z.B. Kennlinien- und Offsetfehler oder auch elektromagnetische Störeinflüsse (EMV).

In vorteilhafter Weise kann der Zeitpunkt des ersten Testzyklus und der folgenden Testzyklen, bzw. deren zeitlicher Abstand voneinander, in Abhängigkeit von der Fahrzeuglänge festgelegt werden.

## Patentansprüche

1. Verfahren zum Betrieb einer elektrisch gesteuerten Druckmittelbremsanlage, welche wenigstens
a) einen druckmittelbetätigbaren Bremszylinder (2) zur Betätigung einer Bremse (6),
b) einen Bremsdrucksensor (28) zur Ermittlung von Bremsdruckdaten (D_{Brems}), welche den in dem Bremszylinder (2) vorliegenden Bremsdruck (p_{Brems}) angeben,
c) eine Ventileinrichtung (4, 26, 27, 29) zur Beeinflussung des Bremsdrucks (p_{Brems}), durch die der Bremszylinder (2) zur Druckmittelzuführung wahlweise mit einem Vorratsdruck (p_{Vorrat}) oder einem Solldruck (p_{Soll}) verbindbar ist, sowie
d) einen Solldrucksensor (20) zur Ermittlung von Solldruckdaten (D_{Soll}) aufweist, welche den Solldruck (p_{Soll}) angeben,
wobei der Bremsdruck (p_{Brems}) nach Maßgabe der Solldruckdaten (D_{Soll}) und/oder der Bremsdruckdaten (D_{Brems}) eingestellt wird, **dadurch gekennzeichnet, daß** zur Überprüfung der Solldruckdaten (D_{Soll}) der Druckmittel-Zufuhrpfad (8, 26, 27, 29, 7) zu dem Bremszylinder (2) durch Betätigung wenigstens eines Teils (4) der Ventileinrichtung (4, 26, 27, 29) zeitweise von dem Vorratsdruck (p_{Vorrat}) auf den Solldruck (p_{Soll}) umgeschaltet wird und dabei der sich einstellende Bremsdruck (p_{Brems}) anhand der Bremsdruckdaten (D_{Brems}) beobachtet wird.

2. Verfahren nach Anspruch 1, **dadurch gekennzeichnet, daß** die Umschaltung auf den Solldruck (p_{Soll}) während einer Bremsung vorgenommen wird.

3. Verfahren nach einem der vorhergehenden Ansprüche, **dadurch gekennzeichnet, daß** zur Überprüfung der Solldruckdaten (D_{Soll}) der Solldruck (p_{Soll}) durch Betätigung wenigstens eines Teils (26, 27) der Ventileinrichtung (4, 26, 27, 29) in den Bremszylinder (2) eingesteuert wird.

4. Verfahren nach Anspruch 3, **dadurch gekennzeichnet, daß** unmittelbar vor einem beabsichtigten Einsteuern des Solldrucks (p_{Soll}) in den Bremszylinder (2) eine geringfügige Entlüftung des Bremszylinders (2) erfolgt.

5. Verfahren nach Anspruch 4, **dadurch gekennzeichnet, daß** die Entlüftung innerhalb des Hysteresebereichs der Bremse (6) erfolgt.

6. Verfahren nach einem der vorhergehenden Ansprüche, **dadurch gekennzeichnet, daß** die Umschaltung auf den Solldruck (p_{Soll}) nur dann vorgenommen wird, wenn die Solldruckdaten (D_{Soll}) einen Solldruck (p_{Soll}) angeben, der gleich oder größer ist als der Ansprechdruck der Bremsanlage.

7. Verfahren nach einem der vorhergehenden Ansprüche, **dadurch gekennzeichnet, daß** zur Überprüfung der Solldruckdaten (D_{Soll}) die Differenz zwischen den Bremsdruckdaten (D_{Brems}) und den Solldruckdaten (D_{Soll}) beobachtet wird und bei einer eine Fehlererkennungsschwelle überschreitenden Differenz ein Fehler erkannt wird.

8. Verfahren nach einem der vorhergehenden Ansprüche, **dadurch gekennzeichnet, daß** die Umschaltung auf den Solldruck (p_{Soll}) während vorgegebener Testzyklen erfolgt, wobei der zeitliche Abstand der Testzyklen in Abhängigkeit von der Fahrzeuglänge festgelegt wird.

9. Verfahren nach Anspruch 8, **dadurch gekennzeichnet, daß** der erste Testzyklus nach Ablauf einer vorgegebenen Wartezeit, welche insbesondere unter Berücksichtigung der Leitungslänge zwischen dem Solldrucksensor (20) und der Ventileinrichtung (4, 26, 27, 29) festgelegt wird, nach Beginn der Bremsung durchgeführt wird.

## Claims

1. Method of operating an electrically controlled pressure medium brake system which has at least
a) a pressure-medium-actuatable brake cylinder (2) for actuation of a brake (6),
b) a brake pressure sensor (28) for ascertaining brake pressure data (D_{brake}) indicating the brake pressure (p_{brake}) prevailing in the brake cylinder (2),
c) a valve device (4, 26, 27, 29) for influencing the brake pressure (p_{brake}), by means of which the brake cylinder (2) is arranged to be connected to the pressure medium supply having, as desired, a reservoir pressure (pᵣₑₛₑᵣᵥₒᵢᵣ) or a desired pressure (p_{desired}), and
d) a desired pressure sensor (20) for ascertaining desired pressure data (D_{desired}) indicating the desired pressure (p_{desired}),
the brake pressure (p_{brake}) being established in accordance with the desired pressure data (D_{desired}) and/or the brake pressure data (D_{brake}), **characterised in that**, for checking of the desired pressure data (D_{desired}), the pressure medium supply path (8, 26, 27, 29, 7) to the brake cylinder (2) is from time to time switched over from the reservoir pressure (pᵣₑₛₑᵣᵥₒᵢᵣ) to the desired pressure (p_{desired}) by actuation of at least one part (4) of the valve device (4, 26, 27, 29), wherein the brake pressure (p_{brake}) that is established is observed with reference to the brake pressure data (D_{brake}).

2. Method according to claim 1, **characterised in that** switching-over to the desired pressure (p_{desired}) is carried out during a braking operation.

3. Method according to one of the preceding claims, **characterised in that**, for checking of the desired pressure data (D_{desired}), controlled application of the desired pressure (p_{desired}) to the brake cylinder (2) is carried out by actuation of at least one part (26, 27) of the valve device (4, 26, 27, 29).

4. Method according to claim 3, **characterised in that**, immediately before an intended controlled application of the desired pressure (p_{desired}) to the brake cylinder (2), slight venting of the brake cylinder (2) is carried out.

5. Method according to claim 4, **characterised in that** the venting is carried out within the hysteresis range of the brake (6).

6. Method according to one of the preceding claims, **characterised in that** the switching-over to the desired pressure (p_{desired}) is carried out only when the desired pressure data (D_{desired}) indicates a desired pressure (p_{desired}) which is equal to or greater than the response pressure of the brake system.

7. Method according to one of the preceding claims, **characterised in that**, for checking of the desired pressure data (D_{desired}), the difference between the brake pressure data (D_{brake}) and the desired pressure data (D_{desired}) is observed and a malfunction is recognised if the difference exceeds a malfunction recognition threshold.

8. Method according to one of the preceding claims, **characterised in that** the switching-over to the desired pressure (p_{desired}) is carried out in the course of prespecified test cycles, the time interval of the test cycles being determined in dependence upon the vehicle length.

9. Method according to claim 8, **characterised in that** the first test cycle is carried out after a prespecified waiting time has expired after the start of braking, which waiting time is determined in particular by taking into account the length of the line between the desired pressure sensor (20) and the valve device (4, 26, 27, 29).

## Revendications

1. Procédé pour faire fonctionner une installation de freinage à fluide sous pression, à commandé électrique, qui comporte au moins
a) un cylindre de frein (2) pouvant être actionné par un fluide sous pression pour actionner un frein (6),
b) un capteur de pression de freinage (28) pour déterminer des données de pression de freinage (D_{freinage}), qui indiquent la pression de freinage (p_{freinage}) présente dans le cylindre de frein (2),
c) un dispositif à soupapes (4, 26, 27, 29) pour influer sur la pression de freinage (p_{freinage}) et à l'aide duquel le cylindre de frein (2) peut être relié, pour l'envoi de fluide sous pression, au choix à une pression de réserve (p_{réserve}) ou à une pression de consigne (p_{consigne}), ainsi
d) qu'un capteur de pression de consigne (20) pour déterminer des données de pression de consigne (D_{consigne}) qui indiquent la pression de consigne (p_{consigne}),
la pression de freinage (p_{freinage}) étant réglée en fonction des données de la pression de consigne (D_{consigne}) et/ou des données de pression de freinage (D_{freinage}),
**caractérisé en ce**
**que** pour le contrôle des données de pression de consigne (D_{consigne}), le trajet (8, 26, 27, 29, 7) d'amenée du fluide sous pression aboutissant au cylindre de frein (2) est commuté par actionnement par instants au moins d'une partie (4) du dispositif à soupapes (4, 26, 27, 29), depuis la pression de réserve (p_{réserve}), à la pression de consigne (p_{consigne}), et que la pression de freinage (p_{freinage}), qui s'établit, est observée sur la base des données de pression de freinage (D_{freinage}).

2. Procédé selon la revendication 1, **caractérisé en ce que** la commutation sur la pression de consigne (p_{consigne}) est réalisée pendant un freinage.

3. Procédé selon l'une des revendications précédentes, **caractérisé en ce que** pour le contrôle des données de pression de consigne (D_{consigne}), la pression de consigne (p_{consigne}) est commandée au moyen de l'actionnement d'au moins une partie (26, 27) dans le dispositif à soupapes (4, 26, 27, 29) dans le cylindre de frein (2).

4. Procédé selon la revendication 9, **caractérisé en ce qu'**une faible désaération du cylindre de frein (2) est réalisée juste avant une commande intentionnelle de la pression de consigne (p_{consigne}) dans le cylindre de frein (2).

5. Procédé selon la revendication 4, **caractérisé en ce que** la désaération s'effectue à l'intérieur de la plage d'hystérésis du frein (6).

6. Procédé selon l'une des revendications précédentes, **caractérisé en ce que** la commutation sur la pression de consigne (p_{consigne}) est réalisée uniquement lorsque les données de pression de consigne (D_{consigne}) indiquent une pression de consigne (p_{consigne}) qui est égale ou supérieure à la pression de réponse de l'installation de freinage.

7. Procédé selon l'une des revendications précédentes, **caractérisé en ce que** pour le contrôle des données de pression de consigne (D_{consigne}), on observe la différence entre les données de pression de freinage (D_{freinage}) et les données de pression de consigne (D_{consigne}) et un défaut est identifié dans le cas d'une différence qui dépasse un seuil d'identification d'erreur.

8. Procédé selon l'une des revendications précédentes, **caractérisé en ce que** la commutation sur la pression de consigne (p_{consigne}) s'effectue pendant des cycles de test prédéterminés, l'intervalle de temps entre les cycles de test étant fixé en fonction de la longueur du véhicule.

9. Procédé selon la revendication 8, **caractérisé en ce que** le premier cycle de test est exécuté après l'écoulement d'un temps d'attente prédéterminé, qui est fixé notamment en tenant compte de la longueur de canalisation entre le capteur de pression de consigne (20) et le dispositif de soupape (4, 26, 27, 29), après le début du freinage.
